(19) 

Europäisches Patentamt

European Patent Office

Office européen des brevets

(11) Numéro de publication : **0 067 358**
**B1**

(12) **FASCICULE DE BREVET EUROPÉEN**

(45) Date de publication du fascicule du brevet :
**29.02.84**

(21) Numéro de dépôt : **82104780.0**

(22) Date de dépôt : **01.06.82**

(51) Int. Cl.³ : **A 23 L 1/34, A 23 L 1/30,
A 23 L 1/24, A 23 G 1/00**

(54) **Composition alimentaire hypocalorique.**

(30) Priorité : **12.06.81 CH 3867/81**

(43) Date de publication de la demande :
**22.12.82 Bulletin 82/51**

(45) Mention de la délivrance du brevet :
**29.02.84 Bulletin 84/09**

(84) Etats contractants désignés :
**BE DE FR GB IT NL SE**

(56) Documents cités :
**DE-A- 2 910 008
FR-A- 2 280 325
FR-A- 2 363 998**

(73) Titulaire : **SOCIETE DES PRODUITS NESTLE S.A.
Case postale 353
CH-1800 Vevey (CH)**

(72) Inventeur : **Bracco, Umberto
Entre-deux-Crêts 20
CH-1814 La Tour-De-Peilz (CH)**

EP 0 067 358 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**0 067 358**

## Composition alimentaire hypocalorique

La présente invention a trait à une composition alimentaire hypocalorique contenant des lipides, notamment sous forme d'une émulsion comprenant de l'huile de jojoba ou de l'huile de jojoba hydrogénée dans la partie lipidique.

L'alimentation dans les pays développés se caractérise par une consommation excessive de matières grasses lesquelles constituent les produits alimentaires les plus riches du point de vue énergétique. Celles-ci ont cependant d'autres fonctions non nutritives, mais techniques, extrêmement importantes dues à leurs propriétés physiques particulières et contribuent à la texture et à la saveur de la plupart des aliments. Les habitudes alimentaires bien ancrées interdisent une diminution de leur consommation.

Jusqu'à présent, les efforts se sont concentrés sur l'adaptation des matières grasses naturelles à des usages particuliers nécessitant une maîtrise de leur composition et de leurs propriétés physiques. Peu d'attention a été consacrée à la diététique : dans ce domaine, on peut citer essentiellement le déplacement de la consommation de graisses d'origine animale vers les graisses d'origine végétale pour améliorer la digestibilité et apporter les acides gras insaturés essentiels ou la réduction du taux de cholestérol des graisses d'origine animale pour tenir compte des risques cardio-vasculaires.

L'huile de jojoba est une huile naturelle extraite des graines d'un arbuste, Simmondsia Chinensis, originaire du sud des Etats-Unis, du Mexique et en général des régions à climat aride. Il s'agit en fait d'une cire liquide composée principalement d'esters à chaîne droite d'acide gras insaturés de 20 et 22 atomes de carbone avec des monoalcools insaturés à chaîne droite ayant également de 20 et 22 atomes de carbone.

Cette huile est utilisée comme cire liquide et en cosmétique en remplacement de l'huile de cachalot. Sa stabilité de viscosité sur une large plage de température est mise à profit en boulangerie et en pâtisserie selon la demande de brevet japonaise N° 78 44 660 mentionnant l'utilisation d'huile de jojoba hydrogénée dans des « shortenings ». Sa propriété de constituer une cire limpide, brillante et stable, trouve une application comme masse de couverture selon la demande de brevet d'Allemagne de l'Ouest N° 2.910.008 décrivant l'utilisation d'huile de jojoba hydrogénée pour l'enrobage des fruits et la dragéification.

La demanderesse a trouvé que l'huile de jojoba et l'huile de jojoba hydrogénée sont très faiblement hydrolysées par la lipase pancréatique et par suite très peu absorbées lors de la digestion. Cette propriété inattendue peut être exploitée dans des produits hypocaloriques très utiles en diététique, dans lesquels on remplace une partie des lipides d'origine végétale par l'huile de jojoba ou l'huile de jojoba hydrogénée, celle-ci jouant le rôle de « modérateur » de calories.

La composition alimentaire hypocalorique selon l'invention est caractérisée par le fait que la partie lipidique contient au moins 10 % en poids d'huile de jojoba ou d'huile de jojoba hydrogénée.

De préférence, la composition alimentaire peut être une émulsion de forme huile dans l'eau ou eau dans l'huile. Parmi les premières, on peut citer le lait entier reconstitué, les crèmes glacées, les mayonnaises, les sauces pour salade ou « salad dressings », etc. ; parmi les secondes on peut citer les pâtes à fourrer ou à tartiner, les crèmes à café ou pâtissières, les masses d'enrobage et le chocolat. Une telle émulsion peut se présenter sous forme liquide, pâteuse ou solide.

Ce peut être une poudre sèche, par exemple dans le cas d'un lait entier en poudre, auquel cas l'émulsion proprement dite est reconstituée par addition d'eau lors de l'utilisation.

La teneur en matière grasse de l'émulsion est généralement comprise entre 20 et 90 % en poids.

L'huile de jojoba peut constituer de 10 à 100 % en poids de la phase lipidique suivant l'effet modérateur de calories qu'on désire obtenir. En effet, on a constaté que le taux d'absorption d'un mélange de l'huile de jojoba avec une huile est inversement proportionnel à la teneur en huile de jojoba du mélange.

De plus, la bonne résistance à l'hydrolyse de l'huile de jojoba permet de l'utiliser comme ingrédient de produits à humidité intermédiaire sans donner lieu aux problèmes de saponification qu'on rencontre par exemple avec les graisses lauriques.

Le taux d'incorporation de l'huile de jojoba sera avantageusement de 10 à 60 % en poids du mélange lipidique pour les graisses lactiques et les huiles végétales d'utilisation courante.

Ce qui précède est également vrai pour l'huile de jojoba hydrogénée. Celle-ci peut être hydrogénée à différents degrés selon les propriétés désirées de la phase lipidique pour le produit envisagé : on utilisera par exemple une huile de jojoba partiellement hydrogénée en mélange avec du beurre de cacao.

Dans le cas d'une utilisation d'huile de jojoba hydrogénée en remplacement partiel du beurre de cacao, le taux d'incorporation compatible avec les propriétés physicochimiques du beurre de cacao est de 10 à 20 % en poids.

Les exemples ci-après illustrent l'invention. Dans ces exemples, les pourcentages sont exprimés en valeurs pondérales :

## Exemple 1

Cet exemple montre que l'huile de jojoba n'est pratiquement pas hydrolysée par la lipase

2

pancréatique in vitro dans des conditions de pH, température et sels biliaires d'une digestion in vivo selon la technique I.U.P.A.C. Méthode II D 27 (1979).

## Méthode

100 mg de matière grasse sont émulsifiés sous agitation vigoureuse par 2 ml de tampon $NH_4Cl$ dans $NH_4OH$ 1,2 N à pH 8,3 contenant 0,025 % de sels biliaires (cholate de sodium) à 40 °C. On ajoute 1 ml d'une solution de $CaCl_2$ à 5 % et 40 mg de lipase pancréatique (steapsine de foie de porc Flucka®).

On laisse ensuite réagir pendant 2, 4, 6, 10 et 15 min. puis on traite par 1 ml d'HCl 6 N pour stopper la lipolyse, on refroidit et on extrait les lipides du milieu d'hydrolyse par l'hexane. On lave la solution organique à l'eau jusqu'à la neutralité et on évapore le solvant. On dose enfin les acides gras libres selon la méthode I.U.P.A.C. II D 1 (1979).

## Résultats

Le tableau I ci-dessous montre la faible hydrolyse de l'huile de jojoba par rapport à l'huile d'arachide et à la graisse lactique cependant que le tableau II montre la proportionalité inverse entre la teneur en huile de jojoba du mélange gras et son taux d'hydrolyse.

### Tableau I

| Temps de digestion (min.) | Huile de jojoba | Huile d'arachide | Graisse lactique |
|---|---|---|---|
| Acides gras libérés en % de la graisse de départ | | | |
| 2' | 4,0 | 12,5 | 7,0 |
| 4' | 4,1 | 36,6 | 12,9 |
| 6' | 4,1 | 35,2 | 21,0 |
| 8' | 5,1 | 43,5 | 28,2 |
| 10' | 5,1 | 44,4 | 32,4 |
| 15' | 6,7 | 67,3 | 52,8 |

### Tableau II

| Temps de digestion (min.) | % d'acides gras libérés | | | |
|---|---|---|---|---|
| | matière grasse lactique | 95 | 90 | 50 | 25 |
| | huile de jojoba | 5 | 10 | 50 | 75 |
| 2' | | 7,6 | 3,5 | 5,1 | 6,4 |
| 6' | | 27,4 | 25,3 | 15,3 | 9,9 |
| 10' | | 46,4 | 42,4 | 27,2 | 15,6 |
| 15' | | 68,3 | 69,1 | 40,25 | 22,4 |

## Exemple 2

On procède à l'hydrogénation de l'huile de jojoba dans les conditions suivantes :

De l'huile de jojoba raffinée à l'alcali et dont la teneur en acides gras libres ne dépasse pas 0,1 % est hydrogénée dans un autoclave à 145 °C et à 4 atm. pendant 2 heures en présence de nickel réduit sur kieselguhr à raison de 0,3 % de catalyseur par rapport à l'huile mise en jeu. L'huile est traitée par 1 % de terre décolorante (Clarcel®) puis filtrée. Son point de fusion est 34 °C-36 °C et elle comporte 16 % d'isomères trans mesurés par chromatographie en phase gazeuse selon la technique décrite par Ackman (J. Chrom. Sc. 12, 131 (1974).

L'huile hydrogénée subit une digestion in vitro dans les conditions de l'exemple 1 avec les résultats indiqués dans le tableau III ci-après :

Tableau III

| Temps de digestion (min.) | Huile de jojoba hydrogénée | Beurre de cacao | Mélange à 50 % huile de jojoba hydrogénée et 50 % beurre de cacao |
|---|---|---|---|
| | % d'acides gras libres par rapport à la graisse de départ | | |
| 2' | 5,0 | 10,5 | 12,0 |
| 4' | 5,6 | 22,5 | 14,5 |
| 6' | 5,1 | 39,2 | 17,5 |
| 10' | 7,2 | 63,4 | 27,5 |

On voit que l'huile de jojoba hydrogénée n'est pratiquement pas attaquée par la lipase pancréatique et qu'elle constitue un modérateur de calories en mélange avec du beurre de cacao.

Exemple 3

Des tests de digestion in vivo ont été conduits comme suit :

Méthode

Test 1 : On gave des rats mâles Sprague Dawley (CD Charles River, Italie) de poids corporel 200 g, en une dose de 10 ml/kg, d'huile de jojoba, on les tue après 1, 2, 4, 8, 12 ou 15 h et on détermine le niveau d'huile dans le plasma recueilli par chromatographie liquide/gaz.

Test 2 : Dans ce test, on donne aux rats une dose quotidienne de 2 ml/kg d'huile de jojoba pendant 5 jours, on les tue 8 h ou 24 h après la dernière administration et on mesure le niveau plasmatique de l'huile.

Dans les deux tests, l'huile de jojoba est identifiée et dosée dans les lipides plasmatiques grâce à ses esters caractéristiques $C_{36}$ à $C_{44}$ qui ont en chromatographie en phase gazeuse des temps de rétention spécifiques par rapport aux lipides plasmatiques (triglycérides, acides gras, stérols, phospholipides).

Résultats

Le tableau IV ci-dessous indique les niveaux plasmatiques de l'huile de jojoba en fonction du temps.

Tableau IV

| Temps (heures) | Niveau plasmatique d'huile en microgramme/ml, exprimé comme total des différentes fractions (longueur de chaîne $C_{36-44}$) | |
|---|---|---|
| | Test 1 | Test 2 |
| 0 (contrôle) | 1,31 | — |
| 1 | 3,24 | — |
| 2 | 4,34 | — |
| 4 | 2,66 | — |
| 8 | 7,53 | 4,83 |
| 12 | 5,63 | — |
| 15 | 1,78 | — |
| 24 | — | 2,05 |

On voit que l'absorption maximale a lieu 8 h après l'administration. On a calculé que celle-ci correspond à une quantité d'huile de jojoba de 0,004 % de la dose administrée. Il n'y a pas d'accumulation dans le plasma comme le montrent les valeurs obtenues après 24 h.

Exemple 4

Lait entier reconstitué hypocalorique

On prépare une poudre de lait entier (env. 28 % mat. grasse) en utilisant comme phase grasse un mélange 20 : 80 et 50 : 50 d'huile de jojoba et de matière grasse lactique anhydre.

4

0 067 358

Les poudres obtenues ont des caractéristiques de composition et macrostructure comparables entre elles comme indiqué ci-dessous :

|  | Poudre lait Phase grasse 100 % graisse lactique (A) | Poudre lait Phase grasse 20 % huile de jojoba 80 % graisse lactique (B) | Poudre lait Phase grasse 50 % huile de jojoba 50 % graisse lactique (C) |
|---|---|---|---|
| Humidité | 2,19 | 2,23 | 2,17 |
| Mat. grasse | 28,04 | 28,21 | 28,27 |
| Diamètre des globules gras (microns) | 0,90 | 0,85 | 0,85 |
| Graisse de surface en % de la graisse totale | 0,41 | 0,39 | 0,45 |

De même leurs propriétés physicochimiques (solubilité, couleur) et organoleptiques sont comparables.

100 g de poudre de lait entier sur la base de leur composition globale ont la valeur calorique suivante :

|  | (A) | (B) | (C) |
|---|---|---|---|
| Mat. grasse | 28,04 | 28,21 | 28,27 |
| Protéines | 27,8 | 27,7 | 28,1 |
| Carbohydrates | 37,9 | 37,4 | 37,3 |
| Kilocalories (Cal) | 515 | 463 | 377 |
| Kilojoules (KJ) | 2 160 | 1 944 | 1 583 |

## Exemple 5

Mayonnaise hypocalorique

On prépare deux formulations de type « mayonnaise » (huile dans l'eau) ayant les compositions indiquées sous (D) et (E) ; les produits ont des caractéristiques organoleptiques comparables mais une valeur calorique sensiblement différente :

|  | (D) | (E) |
|---|---|---|
| Huile de tournesol | 81 | 41 |
| Huile de jojoba | — | 40 |
| Jaune d'œuf | 5 | 5 |
| Vinaigre | 4 | 4 |
| Sel | 1,5 | 1,5 |
| Sucre | 1,5 | 1,5 |
| Arômes | 0,8 | 0,8 |
| Eau pour compléter à 100 | — | — |
| Cal/100 g | 780 | 422 |
| KJ/100 g | 3 270 | 1 770 |

## Exemple 6

Sauce de salade hypocalorique

On prépare des sauces de salade qui sont des émulsions huile dans l'eau dont la phase aqueuse contient du vinaigre ; l'amidon est utilisé comme épaississant.

5

**0 067 358**

Les compositions données sous (F) et (G) ci-dessous illustrent la diminution de la valeur calorique obtenue par l'utilisation de l'huile de jojoba :

|  | (F) | (G) |
| --- | --- | --- |
| Huile de tournesol | 42 | 20 |
| Huile de jojoba | — | 22 |
| Jaune d'œuf | 5 | 5 |
| Sel | 4 | 4 |
| Sucre | 3 | 3 |
| Amidon | 9 | 9 |
| Vinaigre | 15 | 15 |
| Epices | 3 | 3 |
| Eau pour compléter à 100 | — | — |
| Cal/100 g | 473 | 274 |
| KJ/100 g | 1 985 | 1 150 |

Exemple 7

Chocolat hypocalorique

La structure de l'huile de jojoba hydrogénée par la méthode indiquée à l'exemple 2 la rend compatible avec le beurre de cacao et/ou les succédanés du beurre de cacao dans les proportions 20 : 80 ce qui permet de préparer des chocolats ou des couvertures ayant les mêmes caractéristiques physiques et organoleptiques, mais à teneur réduite en calories, pour les compositions de chocolat (H) et (I) comme indiqué ci-dessous :

|  | (H) | (I) |
| --- | --- | --- |
| Solides de cacao (mat. grasse 55 %) | 32,8* | 32,8* |
| Saccharose | 48,3 | 48,3 |
| Beurre de cacao | 19,2 | 12,0 |
| Huile de jojoba hydrogénée | — | 7,2 |
| Lécithine de soja | 0,3 | 0,3 |
| Arômes | traces | traces |
| Cal/100 g | 560 | 495 |
| KJ/100 g | 2 350 | 2 070 |

\* correspond à 30,0 de matière sèche.

**Revendications**

1. Composition alimentaire hypocalorique contenant des lipides, notamment sous forme d'une émulsion, caractérisée par le fait que la partie lipidique contient au moins 10 % en poids d'huile de jojoba ou d'huile de jojoba hydrogénée.

2. Composition alimentaire hypocalorique selon la revendication 1, caractérisée en ce que sa partie lipidique est un mélange d'huile végétale et de 10 à 60 % en poids d'huile de jojoba.

3. Composition alimentaire hypocalorique selon la revendication 2 sous forme de poudre de lait entier.

4. Composition alimentaire hypocalorique selon la revendication 2 sous forme de mayonnaise ou sauce de salade.

5. Composition alimentaire hypocalorique selon la revendication 1, caractérisée en ce que sa partie lipidique contient du beurre de cacao et/ou un substitut du beurre de cacao et 10 à 20 % en poids d'huile de jojoba hydrogénée.

6. Composition alimentaire selon la revendication 5 sous forme de chocolat ou de masse de couverture.

## Claims

1. A hypocaloric lipid-containing food composition, preferably in the form of an emulsion, characterised in that the lipid phase contains at least 10 % by weight of jojoba oil or hydrogenated jojoba oil.

2. A hypocaloric food composition according to claim 1, characterised in that the lipid phase thereof is a mixture of vegetable oil and from 10 to 60 % by weight of jojoba oil.

3. A hypocaloric food composition according to claim 2 in the form of whole milk powder.

4. A hypocaloric food composition according to claim 2 in the form of a mayonnaise or salad dressing.

5. A hypocaloric food composition according to claim 1, characterised in that the lipid phase thereof contains cocoa butter and/or a cocoa butter substitute and from 10 to 20 % by weight of hydrogenated jojoba oil.

6. A food composition according to claim 5 in the form of chocolate or a confectioner's coating.

## Ansprüche

1. Kalorienarme Nahrungsmittelzusammensetzung, welche Lipide, insbesondere in Form einer Emulsion, enthält, dadurch gekennzeichnet, daß der Lipidanteil mindestens 10 Gew.-% Jojoba-Öl oder hydriertes Jojoba-Öl enthält.

2. Kalorienarme Nahrungsmittelzusammensetzung nach Anspruch 1, dadurch gekennzeichnet, daß ihr Lipidanteil ein Gemisch aus einem Pflanzenöl und 10 bis 60 Gew.-% Jojoba-Öl ist.

3. Kalorienarme Nahrungsmittelzusammensetzung nach Anspruch 2 in Form von Vollmichpulver.

4. Kalorienarme Nahrungsmittelzusammensetzung nach Anspruch 2 in Form von Mayonnaise oder einer Salatsoße.

5. Kalorienarme Nahrungsmittelzusammensetzung nach Anspruch 1, dadurch gekennzeichnet, daß ihr Lipidanteil Kakaobutter und/oder ein Kakaobutter-Substitut und 10 bis 20 Gew.-% hydriertes Jojoba-Öl enthält.

6. Nahrungsmittelzusammensetzung nach Anspruch 5 in Form von Schokolade oder eine Überzugsmasse.